# EUROPEAN PATENT SPECIFICATION

(11) **EP 0 781 793 B1**
(45) Date of publication and mention of the grant of the patent: **09.05.2001**
(21) Application number: 96309310.9
(22) Date of filing: 19.12.1996
(51) Int. Cl.: C08G 65/32, C08F 8/32, C10L 1/22

(54) **Reductive amination process for manufacturing a fuel additive from polyoxybutylene alcohol with ethylene diamine**
Reduktives Aminierungsverfahren um aus Polyoxybutylenalkohol mit Ethylendiamin einen Kraftstoffzusatz herzustellen
Procédé d'amination réductive pour la fabrication d'un additif pour combustible à partir de polyoxybutylène alcool avec de l'éthylène diamine

(30) Priority: 19.12.1995 US 574485
(43) Date of publication of application: 02.07.1997
(73) Proprietor: Chevron Chemical Company LLC, San Ramon, CA 94583-4289 (US)
(72) Inventor: Gray, James A., Novato, CA 94947 (US)
(74) Representative: Nash, David Allan

(56) References cited:
- EP-A- 0 322 110
- EP-A- 0 382 405
- EP-A- 0 388 045
- EP-A- 0 436 235
- DE-A- 3 611 230
- GB-A- 804 132
- US-A- 4 152 353
- US-A- 4 404 404
- US-A- 4 806 690

## Description

The present invention relates to a two-stage amination of a polymeric alcohol with a polyamine, such as ethylene diamine.

### BACKGROUND OF THE INVENTION

Although the prior art discloses amination of polymeric alcohols with either liquid ammonia or a primary monoamine, they do not teach amination of polymeric alcohols with polyamines, or address the problems associated with disproportionation of the polyamine to ammonia, cyclic amines, and various condensation products.

US-A-4,618,717 discloses conversion of oxyethylene glycol monoalkyl ethers to the corresponding primary amines by reaction with ammonia over a nickel-copper-chromium-containing catalyst in the presence of hydrogen at a temperature of from 175° C to 250° C.

US-A-4,985,047 discloses conversion of a polyol precursor to a polyether diamine by reaction with ammonia over a nickel-copper-chromium-containing catalyst in the presence of hydrogen at a temperature of from 190° C to 220° C.

US-A-5,112,364 discloses amination of a secondary polymeric alcohol with either liquid ammonia or a primary monoamine over a catalyst in the presence of hydrogen at a temperature of from 160° C to 250° C.

US-A-4,832,702 discloses producing polybutyl- and polyisobutylamines by hydroformylating a polybutene or polyisobutene to make an aldehyde or alcohol intermediate and then aminating these with liquid ammonia over a cobalt containing catalyst at a temperature of from 80° C to 200° C.

These patents do not teach use of a polyamine in reductive amination of polymeric alcohol, thus it would not address the problems associated with disproportionation of the polyamine to ammonia, cyclic amines, and various condensation products.

### SUMMARY OF THE INVENTION

The present invention comes out of basic research in the field amination of a polymeric alcohol. It involves a process for making an amine fuel additive by reductively aminating a polymeric alcohol, such as polyoxybutylene alcohol, with a polyamine, such as ethylene diamine. This is a direct attachment route for a polyamine to the polymeric alcohol.

The polymeric alcohol is reacted at a temperature of at least 230° C in the presence of a hydrogenation/dehydrogenation catalyst to produce a polymeric aldehyde or polymeric ketone (depending upon whether the polymeric alcohol was a primary alcohol or a secondary alcohol), then the polymeric aldehyde or polymeric ketone is reacted with a polyamine at a temperature of below 190° C in the presence of hydrogen and a hydrogenation catalyst to produce the amine fuel additive.

This is a two step process because we have found that, if we try to do the amination in a single step process, by having the reaction of the polymeric alcohol to a polymeric carbonyl intermediate and the reaction of the intermediate with a polyamine in the same reactor, the polyamine disproportionates to ammonia and a wide variety of other amine byproducts at the temperature needed to make the polymeric alcohol react. Therefore, we do the reaction of the polymeric alcohol to polymeric carbonyl intermediate in a separate reaction stage from where we do the reaction of the polymeric carbonyl intermediate with the polyamine.

In our process, the polymeric alcohol is reacted at a temperature of at least 230° C in the presence of a hydrogenation/dehydrogenation catalyst to produce a polymeric carbonyl intermediate, then the polymeric carbonyl intermediate is reacted with a polyamine at a temperature of below 190° C in the presence of hydrogen and a hydrogenation catalyst to produce the polyamine adduct.

Preferably, the polymeric alcohol is either a poly(oxy)alkylene alcohol or a polyalky alcohol, the polymeric carbonyl intermediate is either a polymeric aldehyde or a polymeric ketone, and the polyamine is either ethylenediamine or diethylenetriamine, more preferably ethylenediamine.

Preferably, the polymeric alcohol is reacted at a temperature of between 230° C and 380° C, and the polymeric carbonyl intermediate is reacted a temperature of between 150° C and 180° C.

An example of a hydrogenation/dehydrogenation catalyst that can be used is copper chromite promoted with alkali metal oxides. British Patent No. 804,132 discloses a process for the dehydrogenation of low molecular weight, saturated aliphatic alcohols or cycloaliphatic primary and secondary alcohols, containing 2 to 6 carbon atoms, into the corresponding aldehydes or ketones by passing the alcohol vapors over copper chromite catalysts, promoted with alkali metal oxide, at temperatures of from 250° C to 380° C. British Patent 1,097,819 teaches the synthesis of typical copper chromite catalysts.

Copper chromite catalysts as discussed above are also useful as hydrogenation catalysts. However, the separation of the imination and hydrogenation reactions from the alcohol dehydrogenation reaction permits the optimization of the second stage reactions with catalysts such as platinum or palladium on carbon; or catalysts containing cobalt, nickel, copper, chromium, or combinations of these metals, both supported and unsupported. U.S. Pat. No. 5,418,201 to Roberts et al. discloses a catalyst containing copper, iron, alumina, and manganese that has been optimized for hydrogenation of carbonyl compounds.

In one embodiment, a polyamine adduct of either poly(oxy)alkylene alcohol or polyalkyl alcohol is produced by reacting the polymeric alcohol at a temperature of between 230° C and 380° C in the presence of a hydrogenation/dehydrogenation catalyst to produce a polymeric aldehyde or ketone intermediate, wherein the hydrogenation/dehydrogenation catalyst comprises copper chromite promoted with at least one alkali metal oxide; and reacting the polymeric carbonyl intermediate with ethylenediamine at a temperature of between 150° C and 180° C in the presence of hydrogen and a hydrogenation catalyst to produce the polyamine adduct, wherein the hydrogenation catalyst comprises at least one metal selected from the group consisting of platinum, palladium, cobalt, nickel, copper, and chromium.

### DETAILED DESCRIPTION OF THE INVENTION

In its broadest aspect, the present invention involves a two-stage process for producing a polyamine adduct of a polymeric alcohol. The polymeric alcohol is reacted at a temperature of at least 230° C in the presence of a hydrogenation/dehydrogenation catalyst to produce a polymeric carbonyl intermediate, then the polymeric carbonyl intermediate is reacted with a polyamine at a temperature of below 190° C in the presence of hydrogen and a hydrogenation catalyst to produce the polyamine adduct.

### FIRST STAGE OF PROCESS

In the first stage of the process, a polymeric alcohol is reacted at a temperature of at least 230° C in the presence of a hydrogenation/dehydrogenation catalyst to produce a polymeric carbonyl intermediate. Preferably, this reaction is carried out at a temperature of between 230° C and 380° C.

### DEFINITIONS

As used herein, the following terms have the following meanings unless expressly stated to the contrary.

The term "amino" refers to the group: ―NH₂.

The term "N-alkylamino" refers to the group: ―NHRₐ wherein Rₐ is an alkyl group.

The term "N,N-dialkylamino" refers to the group: ―NR_{b}R_{c} wherein R_{b} and R_{c} are alkyl groups.

The term "alkyl" refers to both straight- and branched-chain alkyl groups.

The term "lower alkyl" refers to alkyl groups having 1 to about 6 carbon atoms and includes primary, secondary and tertiary alkyl groups. Typical lower alkyl groups include, for example, methyl, ethyl, n-propyl, isopropyl, n-butyl, sec-butyl, t-butyl, n-pentyl, n-hexyl and the like.

The term "lower alkoxy" refers to the group --OR_{d} wherein R_{d} is lower alkyl. Typical lower alkoxy groups include methoxy, ethoxy and the like.

The term "alkaryl" refers to the group: 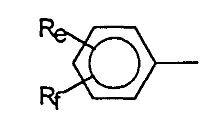 wherein Rₑ and R_{f} are each independently hydrogen or an alkyl group, with the proviso that both Rₑ and R_{f} are not hydrogen. Typical alkylaryl groups include, for example, tolyl, xylyl, cumenyl, ethylphenyl, butylphenyl, dibutylphenyl, hexylphenyl, octylphenyl, dioctylphenyl, nonylphenyl, decylphenyl, didecylphenyl, dodecylphenyl, hexadecylphenyl, octadecylphenyl, icosylphenyl, tricobtylphenyl and the like. The term "alkylphenyl" refers to an alkaryl group of the above formula in which Rₑ is alkyl and R_{f} is hydrogen.

The term "aralkyl" refers to the group: 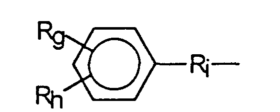 wherein R_{g} and Rₕ are each independently hydrogen or an alkyl group; and Rᵢ is an alkylene group. Typical alkaryl groups include, for example, benzyl, methylbenzyl, dimethylbenzyl, phenethyl and the like.

The term "oxyalkylene unit" refers to an ether moiety having the general formula: 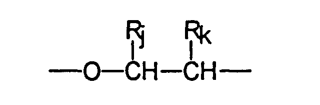 wherein Rⱼ and Rₖ are each independently hydrogen or lower alkyl groups.

The term "poly(oxyalkylene)" refers to a polymer or oligomer having the general formula: 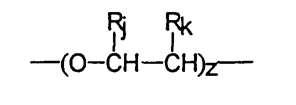 wherein Rⱼ and Rₖ are as defined above, and z is an integer greater than 1. When referring herein to the number of poly(oxyalkylene) units in a particular poly(oxyalkylene) compound, it is to be understood that this number refers to the average number of poly(oxyalkylene) units in such compounds unless expressly stated to the contrary. The term "poly(oxyalkylene)" also includes blocked or random polyethers wherein Rⱼ and Rₖ are varied throughout the polymer chain.

The term "hydrocarbyl" denotes an organic radical composed of carbon and hydrogen which may be aliphatic, alicyclic, aromatic or combinations thereof, e.g., aralkyl. Preferably, the hydrocarbyl group will be relatively free of aliphatic unsaturation, i.e., ethylenic and acetylenic, particularly acetylenic unsaturation.

Preferably, the polymeric alcohol is either a poly(oxy)alkylene alcohol or a polyalkyl alcohol. Poly(oxy)alkylene alcohol has the formula: 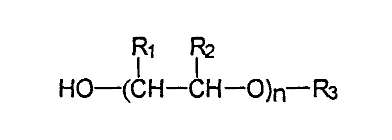 wherein R₁ and R₂ are independently hydrogen or lower alkyl having 1 to 6 carbon atoms, and each R₁ and R₂ is independently selected in each -O-CHR₁-CHR₂― unit; R₃ is hydrogen, alkyl having 1 to 100 carbon atoms, phenyl, aralkyl having 7 to 100 carbon atoms or alkaryl having 7 to 100 carbon atoms, or an acyl group of the formula: 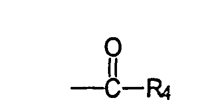 wherein R₄ is alkyl having 1 to 30 carbon atoms, phenyl, aralkyl having 7 to 36 carbon atoms, or alkaryl having 7 to 36 carbon atoms; and n is an integer from 5 to 100. Poly(oxyalkylene) alcohols are known compounds that can be prepared using conventional procedures. For example, suitable procedures for preparing such compounds are taught in U.S. Pat. Nos. 2,782,240 and 2,841,479, the disclosures of which are incorporated herein by reference. The preparation of homopolymers and copolymers is further taught in U.S. Pat. No. 5,409,507 to Cherpeck.

Polyalkyl alcohol has the formula:

HO―R₅

wherein R₅ is a polyalkyl group having a weight average molecular weight in the range of about 500 to 5,000, more preferably about 500 to 3,000, and most preferably about 600 to 2,000. The term "alkyl" refers to both straight-and branched-chain alkyl groups. In general, the polyalkyl substituent on the polyalkyl alcohols employed in the invention may be generally derived from polyolefins which are polymers or copolymers of mono-olefins, particularly 1-mono-olefins, such as ethylene, propylene, butylene, and the like. Preferably, the mono-olefin employed will have 2 to about 24 carbon atoms, and more preferably, about 3 to 12 carbon atoms. More preferred mono-olefins include propylene, butylene, particularly isobutylene, 1-octene and 1-decene. Polyolefins prepared from such mono-olefins include polypropylene, polybutene, especially polyisobutene, and the polyalphaolefins produced from 1-octene and 1-decene. The preferred polyisobutenes used to prepare the presently employed polyalkyl alcohols are taught in U.S. Pat. No. 5,380,345 to Cherpeck, while the polyalkyl alcohols presently employed may be prepared by conventional procedures taught, for example, in U.S. Pat. Nos. 5,055,607 to Buckley and 4,859,210 to Franz et al. The disclosures of U.S. Pat. Nos. 4,859,210; 5,055,607; and 5,380,345 are incorporated herein by reference for all purposes.

Preferably, the resulting polymeric carbonyl intermediates are polymeric ketones if the poly(oxyalkylene) and the polyalky alcohols are secondary alcohols, and are polymeric aldehydes if the poly(oxyalkylene) and the polyalky alcohols are primary alcohols.

The poly(oxyalkylene) carbonyl intermediate can be represented by the formula: 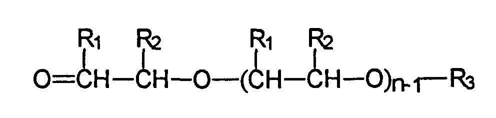 where R₁, R₂, R₃ and n are defined as above. If R₁ is hydrogen, then the poly(oxyalkylene) carbonyl intermediate is an aldehyde. If R₁ is a lower alkyl, then the poly(oxyalkylene) carbonyl intermediate is a ketone. Similarly, if the alcohol is attached to a branched carbon in R₅ of the polyalkyl alcohol, the carbonyl intermediate is a polyalkyl ketone. If the alcohol is attached to an unbranched carbon in R₅ of the polyalkyl alcohol, the carbonyl intermediate is a polyalkyl aldehyde. As an example, U.S. Pat. 4,859,210 to Franz et al. teaches how to make polyalkyl alcohol via hydroformylation of polybutene. This method yields a primary polyalkyl alcohol with the formula:

HO―CH₂―R₆

wherein R₆ has the same definition as R₅. This polyalkyl alcohol then forms a polyalkyl aldehyde when dehydrogenated having the formula:

O=CH―R₆

wherein R₆ is defined as above.

Preferably, the hydrogenation/dehydrogenation catalyst is a supported catalyst in which the primary component is a metal from the group cobalt, nickel, copper, and chromium and mixtures thereof; and lesser components that act as promoters are selected from the group barium, magnesium, manganese, zirconium, iron, zinc, lanthanum, and cerium and mixtures thereof. Typical supports include alumina, silica, zirconia, or mixtures of these components (British Patent 1,361,363; U.S. 4,806,690). The oxides of the primary metals themselves can act as supports such as chromia, zirconia, and unreduced nickel (U.S. 3,152,998; U.S. 4,806,690). Unsupported, highly dispersed, slurry versions of these catalysts may be used (U.S. 4,152,353; U.S. 4,210,605; U.S. 4,409,399), but this would require a filtration step that would further complicate the process. The catalyst is activated by reduction of some of the metal oxides in hydrogen at temperatures in the range 170° C to 320° C, depending upon the catalyst.

### SECOND STAGE OF PROCESS

In the second stage of the process, the polymeric carbonyl intermediate is reacted with a polyamine at a temperature of below 190° C in the presence of hydrogen and a hydrogenation catalyst to produce the polyamine adduct. Preferably, this reaction is carried out at a temperature of between 150° C and 180° C.

The polyamine reactant used in the present invention is preferably an acyclic polyamine having terminal amino nitrogen atoms or, less preferably, a nitrogen heterocycle. In each case the amino nitrogens are separated from each other by at least two carbon atoms. The polyamine preferably has a carbon-to-nitrogen ratio of from about 1:1 to 10:1. The polyamine may be substituted with substituents selected from hydrogen; hydrocarbyl groups of from 1 to about 10 carbon atoms; acyl groups of from 2 to about 10 carbon atoms; and monoketone, monohydroxy, mononitro, monocyano, alkyl and alkoxy derivatives of hydrocarbyl groups of about 1 to 10 carbon atoms. At least one of the basic nitrogen atoms of the polyamine should be a primary or secondary amino nitrogen. The polyamine may also be cyclic, such as in the case of piperazine and aminoethylpiperazine. The polyamine component employed in the present invention has been described and exemplified more fully in U.S. Pats. No. 4,191,537 to Lewis and Honnen and 5,413,614 to Cherpeck. Preferably, the polyamine is either ethylenediamine or diethylenetriamine. More preferably, it is ethylenediamine.

The preferred family of polyamine adducts of the polymeric alcohols of this invention can be represented by the formula: 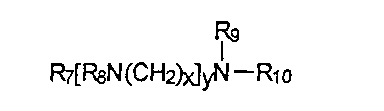 where R₇ is a lower alkyl or hydrogen, R₈ is a lower alkyl or hydrogen, x is 2 to 10, y is 1 to 5, R₉ is a lower alkyl, hydrogen, or the polymeric carbonyl fragment from the polymeric alcohol, and R₁₀ is the polymeric carbonyl fragment from the polymeric alcohol. The polymeric carbonyl fragment, R₁₀, from the poly(oxyalkylene) alcohol can be represented by the formula: 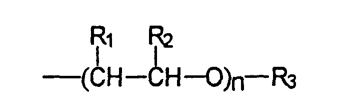 where R₁, R₂, R₃, and n are defined as before. The polymeric carbonyl fragment from the polyalkyl alcohol is simply R₅ as defined before. When only one polymeric carbonyl fragment is attached to the polyamine, this product is called the mono polyamine adduct of the polymeric alcohol. When two polymeric carbonyl fragments attach at the same or different nitrogens in the polyamine, this product is called the bis polyamine adduct of the polymeric alcohol. Polyamines containing two primary amines, such as ethylenediamine and diethylenetriamine, can react with more than one polymeric carbonyl fragment to produce a variety of multiple adducts. The mono polyamine adduct is the preferred product and is favored by using charge mole ratios of polyamine to polymeric carbonyl intermediate of greater than one, preferably in the range 2:1 to 10:1. The most preferred ratio is 3:1.

The second stage catalyst used for imination/hydrogenation reactions can be the same as used in the first stage, or may be chosen to optimize the second stage reactions. The key difference between the stages is the lower temperature afforded in the second stage compared to that needed for the first stage dehydrogenation reaction. The second stage catalyst selection is of secondary importance compared to lowering the imination/hydrogenation temperature. Preferably, the imination/hydrogenation catalyst is a supported catalyst in which the primary component is a metal from the group ruthenium, rhodium, palladium, platinum, cobalt, nickel, copper, and chromium and mixtures thereof; and lesser components that act as promoters are selected from the group barium, magnesium, zirconium, iron, zinc, lanthanum, and cerium and mixtures thereof. Typical supports include alumina, silica, zirconia, charcoal, chromium oxide, zinc oxide or mixtures of these components (British Patent 1,361,363; U.S. 4,806,690). The oxides of the primary metals themselves can act as supports such as chromia, zirconia, and unreduced nickel (U.S. 3,152,998; U.S. 4,806,690). Unsupported, highly dispersed, slurry versions of these catalysts may be used (U.S. 4,152,353; U.S. 4,210,605; U.S. 4,409,399), but this would require a filtration step that would further complicate the process. The catalyst is activated by reduction of some of the metal oxides in hydrogen at temperatures in the range 170° C to 320° C, depending upon the catalyst. The major difference between the catalysts used in the two stages is that the metals combination can be optimized for each stage.

### EXAMPLES

The invention will be further illustrated by following examples, which set forth particularly advantageous method embodiments. While the Examples are provided to illustrate the present invention, they are not intended to limit it.

### COMPARATIVE EXAMPLE A

### ONE-STEP PROCESS AT 250°C

An upflow, continuous, fixed-bed reactor was charged with 148 cm³ of a catalyst consisting of 60 wt% copper on silica and in the form of 3.18 mm (1/8-inch) extrudates. The catalyst was reduced in situ with hydrogen to 210° C before use. Polyoxybutylene alcohol was fed at a rate of 132.5 g/h, ethylenediamine at a rate of 15.7 g/h, and hydrogen at a rate of 15 nL/h (0° C, 101 kPa (1 atm)) to the reactor while the reactor was at a temperature of 250° C and 13.9 MPa (2000 psig). The polyoxybutylene alcohol was made from an alkyl phenol (C₁₂ propylene tetramer) on to which was polymerized butylene oxide to give a number average molecular weight of 1574. The charge mole ratio of ethylenediamine to polyoxybutylene alcohol was 3 to 1. The crude product was diluted with toluene, washed several times with water to remove unreacted ethylenediamine, and the toluene was removed by distillation. The washed product had an alkalinity value of 41.3 mg KOH/g. A combination of liquid column chromatography, ¹³C-NMR, and ¹H-NMR analyses indicated that no ethylenediamine adduct was formed. The washed product consisted of 29.6 wt% mono ammonia adduct of the polyoxybutylene alcohol, 9.9 wt% of the piperazine adduct, 10.2 wt% of heavy amine adduct (heavy amine formed by condensation reactions of the ethylenediamine disproportionation products), and 50.3 wt% unreacted polyoxybutylene alcohol. Amine selectivity for the ammonia adduct of polyoxybutylene alcohol was 59.6%.

### COMPARATIVE EXAMPLE B

### ONE-STEP PROCESS AT 230° C

The same feeds, catalyst, and procedures were used as described in Comparative Example A except that the reactor temperature and pressure were 230° C and 20.8 MPa (3000 psig). Polyoxybutylene alcohol was fed at a rate of 62.9 g/h, ethylenediamine at a rate of 6.7 g/h, and hydrogen at a rate of 12 nL/h (0° C, 101 kPa (1 atm)) to the reactor. The washed product had an alkalinity value of 14.1 mg KOH/g. A combination of liquid column chromatography, ¹³C-NMR, and ¹H-NMR analyses indicated that no ethylenediamine adduct was formed. The washed product consisted of 13.0 wt% mono ammonia adduct of the polyoxybutylene alcohol, 1.5 wt% of the piperazine adduct, 8.0 wt% of heavy amine adduct (heavy amine formed by condensation reactions of the ethylenediamine disproportionation products), and 77.1 wt% unreacted polyoxybutylene alcohol. Amine selectivity for the ammonia adduct of polyoxybutylene alcohol was 57.8%.

### COMPARATIVE EXAMPLE C

### ONE-STEP PROCESS AT 250° C

An upflow, continuous, fixed-bed reactor was charged with 137 cm³ of a catalyst consisting Ni-Cu-Cr₂O₃ (54.7 wt% Ni, 18.9 wt% Cu, 1.44 wt% Cr) made in accordance with U.S. Pat. No. 3,152,998 except in the form of 1.59mm (1/16-inch)extrudates. The catalyst was reduced in situ with hydrogen to 320° C before use. The polyoxybutylene alcohol from Comparative Example A was fed at a rate of 63.4 g/h, ethylenediamine at a rate of 7.0 g/h, and hydrogen at a rate of 15 nL/h (0° C, 101 kPa (1 atm) to the reactor while the reactor was at a temperature of 250° C and 13.9 MPa (2000 psig). The charge mole ratio of ethylenediamine to polyoxybutylene alcohol was 3 to 1. The crude product was diluted with toluene, washed several times with water to remove unreacted ethylenediamine, and the toluene was removed by distillation.
The washed product had an alkalinity value of 32.0 mg KOH/g. A combination of liquid column chromatography, ¹³C-NMR, and ¹H-NMR analyses indicated that no ethylenediamine adduct was formed. The washed product consisted of 70.9 wt% mono ammonia adduct of the polyoxybutylene alcohol, 2.1 wt% of the piperazine adduct, 1.6 wt% of heavy amine adduct (heavy amine formed by condensation reactions of the ethylenediamine disproportionation products) and di-amine adduct, and 25.3 wt% unreacted polyoxybutylene alcohol. Amine selectivity for the ammonia adduct of polyoxybutylene alcohol was 95.0%.

### COMPARATIVE EXAMPLE D

### ONE-STEP PROCESS AT 210° C

The same feeds, catalyst, and procedures were used as described in Comparative Example C except that the reactor temperature was 210° C. Polyoxybutylene alcohol was fed at a rate of 62.7 g/h, ethylenediamine at a rate of 8.6 g/h, and hydrogen at a rate of 15 nUh (0° C, 1 atm) to the reactor. The washed product had an alkalinity value of 36.2 mg KOH/g. A combination of liquid column chromatography, ¹³C-NMR, and ¹H-NMR analyses indicated that no ethylenediamine adduct was formed. The washed product consisted of 59.0 wt% mono ammonia adduct of the polyoxybutylene alcohol, 3.5 wt% of the piperazine adduct, 4.1 wt% of heavy amine adduct (heavy amine formed by condensation reactions of the ethylenediamine disproportionation products) and di-amine adduct, and 32.5 wt% unreacted polyoxybutylene alcohol. Amine selectivity for the ammonia adduct of polyoxybutylene alcohol was 88.6%.

### COMPARATIVE EXAMPLE E

### ONE-STEP PROCESS AT 230° C

The same feeds, catalyst, and procedures were used as described in Example D except that the reactor temperature was 230° C. Polyoxybutylene alcohol was fed at a rate of 122.1 g/h, ethylenediamine at a rate of 15.1 g/h, and hydrogen at a rate of 15 nL/h (0° C, 101 kPa 1 atm) to the reactor. The washed product had an alkalinity value of 32.8 mg KOH/g. A combination of liquid column chromatography, ¹³C-NMR, and ¹H-NMR analyses indicated that no ethylenediamine adduct was formed. The washed product consisted of 55.9 wt% mono ammonia adduct of the polyoxybutylene alcohol, 2.4 wt% of the piperazine adduct, 1.8 wt% of heavy amine adduct (heavy amine formed by condensation reactions of the ethylenediamine disproportionation products) and di-amine adduct, and 39.6 wt% unreacted polyoxybutylene alcohol. Amine selectivity for the ammonia adduct of polyoxybutylene alcohol was 93.0%.

### COMPARATIVE EXAMPLE F

### ONE-STEP PROCESS AT 210° C

An upflow, continuous, fixed-bed reactor was charged with 147 cm³ of a catalyst consisting 25 wt% cobalt on silica in the form of 1/16-inch extrudates. The catalyst was reduced in situ with hydrogen to 250° C before use. The polyoxybutylene alcohol from Comparative Example A was fed at a rate of 66.2 g/h, ethylenediamine at a rate of 7.9 g/h, and hydrogen at a rate of 14.5 nL/h (0° C, 101 kPa 1 atm) to the reactor while the reactor was at a temperature of 210° C and 13.9 MPa (2000 psig). The charge mole ratio of ethylenediamine to polyoxybutylene alcohol was 3 to 1. The crude product was diluted with toluene, washed several times with water to remove unreacted ethylenediamine, and the toluene was removed by distillation. The washed product had an alkalinity value of 26.3 mg KOH/g. A combination of liquid column chromatography, ¹³C-NMR, and ¹H-NMR analyses indicated that no ethylenediamine adduct was formed. The washed product consisted of 48.2 wt% mono ammonia adduct of the polyoxybutylene alcohol, 2.4 wt% of the piperazine adduct, 2.4 wt% of heavy amine adduct (heavy amine formed by condensation reactions of the ethylenediamine disproportionation products) and di-amine adduct, and 46.7 wt% unreacted polyoxybutylene alcohol. Amine selectivity for the ammonia adduct of polyoxybutylene alcohol was 90.9%.

### COMPARATIVE EXAMPLE G

### ONE-STEP PROCESS AT 250° C

The same feeds, catalyst, and procedures were used as described in Comparative Example F except that the reactor temperature was 250° C. Polyoxybutylene alcohol was fed at a rate of 198.7 g/h, ethylenediamine at a rate of 22.3 g/h, and hydrogen at a rate of 14.5 nL/h (0° C, 101 kPa (1 atm)) to the reactor. The washed product had an alkalinity value of 20.2 mg KOH/g. A combination of liquid column chromatography, ¹³C-NMR, and ¹H-NMR analyses indicated that no ethylenediamine adduct was formed. The washed product consisted of 47.4 wt% mono ammonia adduct of the polyoxybutylene alcohol, 1.1 wt% of the piperazine adduct, 1.0 wt% of heavy amine adduct (heavy amine formed by condensation reactions of the ethylenediamine disproportionation products) and di-amine adduct, and 50.3 wt% unreacted polyoxybutylene alcohol. Amine selectivity for the ammonia adduct of polyoxybutylene alcohol was 95.8%.

Comparative Examples A through G show that no ethylenediamine adduct of polyoxybutylene alcohol was formed in the temperature range 210-250° C using some typical hydrogenation/dehydrogenation catalysts. This is the temperature range needed to make the polymeric alcohol undergo reaction. However, the ethylenediamine severly disproportionates under these conditions even in the presence of hydrogen to form ammonia, cyclic polyamines, and polyamine condensation products. Approximate material balances of the ethylenediamine indicated significant amine conversion to disproportionation products. The product analyses as well as the excess product gas showed that ammonia was a major byproduct of ethylenediamine disproportionation and that it readily reacted with the polyoxybutylene alcohol.

### COMPARATIVE EXAMPLE H

### ONE-STEP PROCESS AT 230° C WITH ALTERNATE POLYAMINE

The same polyoxybutylene alcohol, catalyst, and procedures were used as described in Comparative Example G except that the reactor temperature was 230° C and the amine was dimethylaminopropylamine. Polyoxybutylene alcohol was fed at a rate of 124.2 g/h, dimethylaminopropylamine at a rate of 23.4 g/h, and hydrogen at a rate of 14.5 nL/h (0° C, 101 kPa (1 atm)) to the reactor. The washed product had an alkalinity value of 12.6 mg KOH/g. A combination of liquid column chromatography, ¹³C-NMR, and ¹H-NMR analyses indicated that no dimethylaminopropylamine adduct was formed. The washed product consisted of 29.4 wt% mono ammonia adduct of the polyoxybutylene alcohol, 0.7 wt% of the piperazine or substituted piperazine adduct, 0.9 wt% of heavy amine adduct (heavy amine formed by condensation reactions of the dimethylaminopropylamine disproportionation products) and di-amine adduct, 7.4 wt% bis adduct, and 61.6 wt% unreacted . polyoxybutylene alcohol. Amine selectivity for the ammonia adduct of polyoxybutylene alcohol was 76.6%.

### COMPARATIVE EXAMPLE I

### ONE-STEP PROCESS AT 230° C WITH ALTERNATE POLYAMINE

The same polyoxybutylene alcohol, catalyst, and procedures were used as described in Comparative Example C except that the reactor temperature was 230° C and the amine was hexamethylenediamine. Polyoxybutylene alcohol was fed at a rate of 121.8 g/h, hexamethylenediamine at a rate of 24.9 g/h, and hydrogen at a rate of 14.5 nL/h (0° C, 101 kPa (1 atm)) to the reactor. The washed product had an alkalinity value of 64.1 mg KOH/g. A combination of liquid column chromatography, ¹³C-NMR, and ¹H-NMR analyses indicated that no hexamethylenediamine adduct was formed. The washed product consisted of 32.9 wt% mono ammonia adduct of the polyoxybutylene alcohol, 0.8 wt% of an unknown amine adduct, 16.9 wt% of heavy amine adduct (heavy amine formed by condensation reactions of the hexamethylenediamine disproportionation products) and unreacted hexamethylenediamine that was not removed by washing, and 48.5 wt% unreacted polyoxybutylene alcohol. Amine selectivity for the ammonia adduct of polyoxybutylene alcohol was 65.0%.

Comparative Examples H and I illustrate that other polyamines also disproportionate under the conditions needed to make polyoxybutylene alcohol react. The fact that dimethylaminopropylamine, with three carbons between the primary amine and tertiary amine, and hexamethylenediamine, with a six carbon separation of the primary amines, also disproportionated suggests that even primary alkyl amines, such as propylamine, may also be subject to disproportionation under these same conditions.

### EXAMPLE 1

### FIRST STEP OF TWO-STEP PROCESS AT 275° C

An upflow, continuous, fixed-bed reactor was charged with 146 cm³ of a catalyst consisting Ni-Cu-Cr₂O₃ (54.7 wt% Ni, 18.9 wt% Cu, 1.44 wt% Cr) made in accordance with U.S. Pat. No. 3,152,998 except in the form of 1.59 mm (1/16-inch) extrudates. The catalyst was reduced in situ with hydrogen to 320° C before use. Polyoxybutylene alcohol was fed at a rate of 152.5 g/h, and hydrogen at a rate of 15/h nL (0° C, 101 kPa (1 atm)) to the reactor while the reactor was at a temperature of 275° C and 276 kPa (26 psig). The polyoxybutylene alcohol was the same as described in Comparative Example A. The crude dehydrogenation product needed no further treatment before analysis. Using analytical tools as discussed in the previous examples, the product consisted of 51.2 wt% polyoxybutylene ketone, 11.5 wt% of olefin form by dehydration of the polyoxybutylene alcohol, and 37.3 wt% unreacted polyoxybutylene alcohol.

### EXAMPLE 2

### FIRST STEP OF TWO-STEP PROCESS AT 275° C

An upflow, continuous, fixed-bed reactor was charged with 146 cm³ of a commercially available copper chromite catalyst in the form of 3.18 mm (1/8-inch) tablets (33 wt% Cu, 30 wt% Cr, and 8 wt% Ba). The catalyst was reduced in situ with hydrogen to 210° C before use. Polyoxybutylene alcohol was fed at a rate of 117.3 g/h, and hydrogen at a rate of 14.5nL/h (0° C, 101 kPa (1 atm)) to the reactor while the reactor was at a temperature of 275° C and 276 kPa (26 psig). The polyoxybutylene alcohol was the same as described in Example 1. The crude dehydrogenation product needed no further treatment before analysis. Using analytical tools as discussed in the previous examples, the product consisted of 41.8 wt% polyoxybutylene ketone, 5.0 wt% of olefin formed by dehydration of the polyoxybutylene alcohol, and 53.2 wt% unreacted polyoxybutylene alcohol.

### EXAMPLE 3

### SECOND STEP OF TWO-STEP PROCESS AT 180° C

The same reactor and catalyst was used as described in Example 2. The crude product from Example 2 containing polyoxybutylene ketone was fed at a rate of 108.4 g/h, ethylenediamine at a rate of 13.3 g/h, and hydrogen at a rate of 14.5 nL/h (0° C, 101 kPa (1 atm)) to the reactor while the reactor was at a temperature of 180° C and 20.8 MPa (3000 psig). The crude product was water washed to remove unreacted ethylenediamine as described in the comparative examples. The washed product had an alkalinity value of 23.5 mg KOH/g. A combination of liquid column chromatography, ¹³C-NMR, and ¹H-NMR analyses indicated that 19.5 wt% of the mono ethylenediamine adduct of the polyoxybutylene alcohol was formed. The washed product also consisted of 2.9 wt% mono ammonia adduct of the polyoxybutylene alcohol, 5.8 wt% of heavy amine adduct (heavy amine formed by condensation reactions of the ethylenediamine disproportionation products), 7.1 wt% polyoxybutylene ketone, 4.7 wt% of olefin formed by dehydration of the polyoxybutylene alcohol, and 59.8 wt% of polyoxybutylene alcohol. Amine selectivity for the ethylenediamine adduct was 69.2%. Selectivity for the ammonia adduct was 10.3%.

### EXAMPLE 4

### SECOND STEP OF TWO-STEP PROCESS AT 150° C

The same reactor and catalyst was used as described in Example 2. The crude product from Example 2 containing polyoxybutylene ketone was fed at a rate of 106.4 g/h, ethylenediamine at a rate of 13.1 g/h, and hydrogen at a rate of 14.5 nL/h (0° C, 101 MPa 1 atm) to the reactor while the reactor was at a temperature of 150° C and 20.8 MPa (3000 psig). The washed product had an alkalinity value of 18.8 mg KOH/g. A combination of liquid column chromatography, ¹³C-NMR, and ¹H-NMR analyses indicated that 15.3 wt% of the mono ethylenediamine adduct of the polyoxybutylene alcohol was formed. The washed product also consisted of 2.9 wt% mono ammonia adduct of the polyoxybutylene alcohol, 4.5 wt% of heavy amine adduct (heavy amine formed by condensation reactions of the ethylenediamine disproportionation products), 8.3 wt% polyoxybutylene ketone, 3.9 wt% of olefin formed by dehydration of the polyoxybutylene alcohol, and 65.1 wt% of polyoxybutylene alcohol. Amine selectivity for the ethylenediamine adduct was 67.5%. Selectivity for the ammonia adduct was 12.6%.

### EXAMPLE 5

### SECOND STEP OF TWO-STEP PROCESS AT 120° C

The same reactor and catalyst was used as described in Example 2. The crude product from Example 2 containing polyoxybutylene ketone was fed at a rate of 104.3 g/h, ethylenediamine at a rate of 13.3 g/h, and hydrogen at a rate of 14.5 nLh (0° C, 101 kPa 1 atm) to the reactor while the reactor was at a temperature of 120° C and 20.8 MPa (3000 psig). The crude product was water washed to remove unreacted ethylenediamine. The washed product had an alkalinity value of 11.4 mg KOH/g. A combination of liquid column chromatography, ¹³C-NMR, and ¹H-NMR analyses indicated that 3.6 wt% of the mono ethylenediamine adduct of the polyoxybutylene alcohol was formed. The washed product also consisted of 4.9 wt% mono ammonia adduct of the polyoxybutylene alcohol, 2.7 wt% of heavy amine adduct (heavy amine formed by condensation reactions of the ethylenediamine disproportionation products), 27.6 wt% polyoxybutylene ketone, 3.8 wt% of olefin formed by dehydration of the polyoxybutylene alcohol, and 57.1 wt% of polyoxybutylene alcohol. Amine selectivity for the ethylenediamine adduct was 32.1 %. Selectivity for the ammonia adduct was 43.7%.

### EXAMPLE 6

### SECOND STEP OF TWO-STEP PROCESS AT 180° C

The procedure in Example 3 was repeated. The crude product from Example 2 containing polyoxybutylene ketone was fed at a rate of 103.8 g/h, ethylenediamine at a rate of 12.8 g/h, and hydrogen at a rate of 14.5 nL/h (0° C, 101 kPa (1 atm)) to the reactor while the reactor was at a temperature of 180° C and 20.8 MPa (3000 psig). The washed product had an alkalinity value of 24.3 mg KOH/g. A combination of liquid column chromatography, ¹³C-NMR, and ¹H-NMR analyses indicated that 18.3 wt% of the mono ethylenediamine adduct of the polyoxybutylene alcohol was formed. The washed product also consisted of 2.6 wt% mono ammonia adduct of the polyoxybutylene alcohol, 8.9 wt% of heavy amine adduct (heavy amine formed by condensation reactions of the ethylenediamine disproportionation products), 10.1 wt% polyoxybutylene ketone, 5.1 wt% of olefin formed by dehydration of the polyoxybutylene alcohol, and 54.6 wt% of polyoxybutylene alcohol. Amine selectivity for the ethylenediamine adduct was 61.5%. Selectivity for the ammonia adduct was 8.7%.

Examples 1-6 show that by separating the reaction into a high temperature dehydrogenation step followed by a lower temperature imination and reduction step, the ethylenediamine adduct of polyoxybutylene alcohol can be formed with a selectivity of 60-70%. The catalyst need not be the same for both steps. The examples used the same catalyst for both steps for experimental convenience. It would be advantageous to tailor catalysts for each step so that ketone yield is maximized in the first step, and ethylenediamine adduct of polyoxybutylene alcohol yield is maximized in the second step.

## Claims

1. A process for producing a polyamine adduct of a polymeric alcohol comprising:
a) reacting said polymeric alcohol at a temperature of at least 230° C in the presence of a hydrogenation/dehydrogenation catalyst to produce a polymeric carbonyl intermediate; and
b) reacting said polymeric carbonyl intermediate with a polyamine at a temperature of below 190° C in the presence of hydrogen and a hydrogenation catalyst to produce said polyamine adduct.

2. A process according to Claim 1 wherein the polymeric alcohol is selected from the group consisting of poly(oxy)alkylene alcohol and polyalkyl alcohol.

3. A process according to Claim 1 wherein the polymeric alcohol is reacted in step (a) at a temperature of between 230° C and 380° C.

4. A process according to Claim 1 wherein the hydrogenation/dehydrogenation catalyst comprises at least one metal selected from the group cobalt, nickel, copper, chromium, and mixtures thereof; and at least one lesser component selected from the group barium, magnesium, manganese, zirconium, iron, zinc, lanthanum, cerium and mixtures thereof.

5. A process according to Claim 1 wherein the polymeric carbonyl intermediate is selected from the group consisting of a polymeric aldehyde and a polymeric ketone.

6. A process according to Claim 1 wherein the polyamine is selected from the group consisting of ethylenediamine and diethylenetriamine.

7. A process according to Claim 6 wherein the polyamine is ethylenediamine.

8. A process according to Claim 1 wherein the polymeric carbonyl intermediate is reacted in step (b) at a temperature of between 150° C and 180° C.

9. A process according to Claim 1 wherein the hydrogenation catalyst comprises at least one metal selected from the group ruthenium, rhodium, palladium, platinum, cobalt, nickel, copper, chromium, and mixtures thereof; and at least one lesser component selected from the group barium, magnesium, zirconium, iron, zinc, lanthanum, and cerium and mixtures thereof.

10. A process for producing a polyamine adduct of a polymeric alcohol selected from the group consisting of poly(oxy)alkylene alcohol and polyalkyl alcohol, said process comprising:
a) reacting said polymeric alcohol at a temperature of between 230° C and 380° C in the presence of a hydrogenation/dehydrogenation catalyst to produce a polymeric carbonyl intermediate, wherein the hydrogenation/dehydrogenation catalyst comprises at least one metal selected from the group cobalt, nickel, copper, chromium, and mixtures thereof; and at least one lesser component selected from the group barium, magnesium, manganese, zirconium, iron, zinc, lanthanum, cerium and mixtures thereof; and
b) reacting said polymeric carbonyl intermediate with ethylenediamine at a temperature of between 150° C and 180° C in the presence of hydrogen and a hydrogenation catalyst to produce said polyamine adduct, wherein the hydrogenation catalyst comprises at least one metal selected from the group ruthenium, rhodium, palladium, platinum, cobalt, nickel, copper, chromium, and mixtures thereof; and at least one lesser component selected from the group barium, magnesium, zirconium, iron, zinc, lanthanum, and cerium and mixtures thereof.

## Patentansprüche

1. Verfahren zur Herstellung des Polyaminaddukts eines Polymeralkohols, umfassend
a) das Umsetzen des Polymeralkohols bei einer Temperatur von mindestens 230°C in Gegenwart eines Hydrierungs-Dehydrierungskatalysators, so dass man eine Carbonyl-Zwischenverbindung erhält; und
b) das Umsetzen der Carbonyl-Zwischenverbindung mit einem Polyamin bei einer Temperatur unterhalb 190°C in Gegenwart von Wasserstoff und einem Hydrierungskatalysators, so dass man das Polyaminaddukt erhält.

2. Verfahren nach Anspruch 1, wobei der Polymeralkohol aus der Gruppe Poly (oxy)alkylenalkohol und Polyalkylalkohol ausgewählt ist.

3. Verfahren nach Anspruch 1, wobei der Polymeralkohol im Schritt (a) bei einer Temperatur zwischen 230 und 380 °C umgesetzt wird .

4. Verfahren nach Anspruch 1, wobei der Hydrierungs-Dehydrierungskatalysator mindestens ein Metall aus der Gruppe Kobalt, Nickel, Kupfer, Chrom und deren Gemische enthält sowie mindestens einen geringeren Bestandteil, ausgewählt aus der Gruppe Barium, Magnesium, Mangan, Zirkon, Eisen, Zink, Lanthan, Cer und deren Gemische.

5. Verfahren nach Anspruch 1, wobei die Carbonyl-Zwischenverbindung aus der Gruppe Polymeraldehyde und Polymerketone ausgewählt ist.

6. Verfahren nach Anspruch 1, wobei das Polyamin aus der Gruppe Ethylendiamin und Ethylentriamin ausgewählt ist.

7. Verfahren nach Anspruch 6, wobei das Polyamin Ethylendiamin ist.

8. Verfahren nach Anspruch 1, wobei die Carbonyl-Zwischenverbindung im Schritt (b) bei einer Temperatur zwischen 150 und 180 °C umgesetzt wird.

9. Verfahren nach Anspruch 1, wobei der Hydrierungskatalysator mindestens ein Metall enthält, ausgewählt aus der Gruppe Ruthen, Rhodium, Palladium, Platin, Kobalt, Nickel, Kupfer, Chrom und deren Gemische und mindestens einen geringeren Bestandteil, ausgewählt aus der Gruppe Barium, Magnesium, Zirkon, Eisen, Zink, Lanthan, Cer und deren Gemische.

10. Verfahren zur Herstellung des Polyaminaddukts eines Polymeralkohols, ausgewählt aus der Gruppe Poly(oxy)-alkylenalkohol und Polyalkylalkohol, umfassend
a) das Umsetzen des Polymeralkohols bei einer Temperatur zwischen 230 und 380°C in Gegenwart eines Hydrierungs-Dehydrierungskatalysators, so dass man eine Carbonyl-Zwischenverbindung erhält, wobei der Hydrierungs-Dehydrierungskatalysator mindestens ein Metall enthält, ausgewählt aus der Gruppe Kobalt, Nickel, Kupfer, Chrom und deren Gemische, und mindestens einen geringen Bestandteil, ausgewählt aus der Gruppe Barium, Magnesium, Mangan, Zirkon, Eisen, Zink, Lanthan, Cer und deren Gemnische, sowie
b) das Umsetzen der Carbonyl-Zwischenverbindung mit Ethylendiamin bei einer Temperatur zwischen 150 und 180 °C in Gegenwart von Wasserstoff und einem Hydrierungskatalysator zum Erhalt des Polyaminaddukts, wobei der Hydrierungskatalysator umfasst mindestens ein Metall, ausgewählt aus der Gruppe Ruthen, Rhodium, Palladium, Platin, Kobalt, Nickel, Kupfer, Chrom und deren Gemische, und mindestens eine geringen Bestandteil, ausgewählt aus der Gruppe Barium, Magnesium, Zirkon, Eisen, Zink, Lanthan, und Cer sowie deren Gemische.

## Revendications

1. Procédé pour la préparation d'un produit d'addition de polyamine à un alcool polymère, comprenant les étapes consistant :
(a) à faire réagir ledit alcool polymère à une température d'au moins 230°C en présence d'un catalyseur d'hydrogénation / déshydrogénation pour produire un intermédiaire carbonylé polymère ; et
(b) à faire réagir ledit intermédiaire carbonylé polymère avec une polyamine à une température inférieure à 190°C en présence d'hydrogène et d'un catalyseur d'hydrogénation pour former ledit produit d'addition de polyamine.

2. Procédé suivant la revendication 1, dans lequel l'alcool polymère est choisi dans le groupe consistant en un poly(oxy)alkylène-alcool et un alcool polyalkylique.

3. Procédé suivant la revendication 1, dans lequel l'alcool polymère est soumis à la réaction dans l'étape (a) à une température comprise dans l'intervalle de 230°C à 380°C.

4. Procédé suivant la revendication 1, dans lequel le catalyseur d'hydrogénation / déshydrogénation comprend au moins un métal choisi dans le groupe consistant en cobalt, nickel, cuivre, chrome et leurs mélanges ; et au moins un constituant secondaire choisi dans le groupe consistant en baryum, magnésium, manganèse, zirconium, fer, zinc, lanthane, cérium et leurs mélanges.

5. Procédé suivant la revendication 1, dans lequel l'intermédiaire carbonylé polymère est choisi dans le groupe consistant en un aldéhyde polymère et une cétone polymère.

6. Procédé suivant la revendication 1, dans lequel la polyamine est choisie dans le groupe consistant en l'éthylènediamine et la diéthylènetriamine.

7. Procédé suivant la revendication 6, dans lequel la polyamine est l'éthylènediamine.

8. Procédé suivant la revendication 1, dans lequel l'intermédiaire carbonylé polymère est soumis à la réaction dans l'étape (b) à une température comprise dans l'intervalle de 150°C à 180°C.

9. Procédé suivant la revendication 1, dans lequel le catalyseur d'hydrogénation comprend au moins un métal choisi dans le groupe consistant en ruthénium, rhodium, palladium, platine, cobalt, nickel, cuivre, chrome et leurs mélanges ; et au moins un constituant secondaire choisi dans le groupe consistant en baryum, magnésium, zirconium, fer, zinc, lanthane, cérium et leurs mélanges.

10. Procédé pour la préparation d'un produit d'addition de polyamine à un alcool polymère choisi dans le groupe consistant en un poly(oxy)alkylène-alcool et un alcool polyalkylique, ledit procédé comprenant les étapes consistant :
(a) à faire réagir ledit alcool polymère à une température comprise dans l'intervalle de 230°C à 380°C en présence d'un catalyseur d'hydrogénation / déshydrogénation pour produire un intermédiaire carbonylé polymère, ledit catalyseur d'hydrogénation / déshydrogénation comprenant au moins un métal choisi dans le groupe consistant en cobalt, nickel, cuivre, chrome et leurs mélanges ; et au moins un constituant secondaire choisi dans le groupe consistant en baryum, magnésium, manganèse, zirconium, fer, zinc, lanthane, cérium et leurs mélanges ; et
(b) à faire réagir ledit intermédiaire carbonylé polymère et l'éthylènediamine à une température comprise dans l'intervalle de 150°C à 180°C en présence d'hydrogène et d'un catalyseur d'hydrogénation pour former ledit produit d'addition de polyamine, ledit catalyseur d'hydrogénation comprenant au moins un métal choisi dans le groupe consistant en ruthénium, rhodium, palladium, platine, cobalt, nickel, cuivre, chrome et leurs mélanges ; et au moins un constituant secondaire choisi dans le groupe consistant en baryum, magnésium, zirconium, fer, zinc, lanthane, cérium et leurs mélanges.
